# EUROPEAN PATENT APPLICATION

(11) **EP 3 062 527 A1**
(43) Date of publication of application: **31.08.2016**
(21) Application number: 14863550.1
(22) Date of filing: 17.04.2014
(51) Int. Cl.: H04Q 11/00

(54) **OPTICAL NETWORK SWITCHING DEVICE**

(30) Priority: 22.11.2013 CN 201310598089
(71) Applicant: Huawei Technologies Co., Ltd., Longgang District Shenzhen, Guangdong 518129 (CN)
(72) Inventor: JIANG, Chendi, Shenzhen Guangdong 518129 (CN); GENG, Dongyu, Shenzhen Guangdong 518129 (CN)
(74) Representative: Maiwald Patentanwalts GmbH
(86) International application number: PCT/CN2014/075590
(87) International publication number: WO 2015/074375

(57) **Abstract**

Embodiments of the present invention relate to the field of optical fiber communications, and disclose an optical network switching device, which can reduce complexity of switching transmission of an optical signal in a high dimension. The device includes: at least one filter, an M×N optical switch, and at least one combiner, where the filter includes one input port and at least one branch output port, where the branch output port of the filter is connected to an input port of the M×N optical switch; and the combiner includes one output port and at least one branch input port, where the branch input port of the combiner is connected to an output port of the M×N optical switch. The embodiments of the present invention are applied to switching processing of an optical signal.

## Description

### TECHNICAL FIELD

The present invention relates to the field of optical fiber communications, and in particular, to an optical network switching device.

### BACKGROUND

A development direction of an optical fiber communications technology is to provide huge bandwidth resources to people by using optical fibers to the greatest extent, and transmit and exchange information without obstruction. People have put forward a concept of an all-optical network, and appearance of an optical switching technology, which is one of core technologies of the all-optical network, well resolves a problem that a high-speed optical communications network is limited by an electronic switching technology and therefore has a low rate.

Seeing from an overall development trend of an optical network switching node, a future switching architecture should be a switching architecture that implements CDC. C represents colorless (wavelength independence): Colorless refers to a feature in which different wavelengths can be reconfigured at a same add/drop port within a station. D represents directionless (direction independence): Directionless refers to a feature in which different dimensional directions can be reconfigured at a same add/drop port within a station. The latter C represents Contentionless (wavelength contention independence): Contentionless means that there is no limitation when same wavelengths in different directions are reconfigured at different add/drop ports within a station.

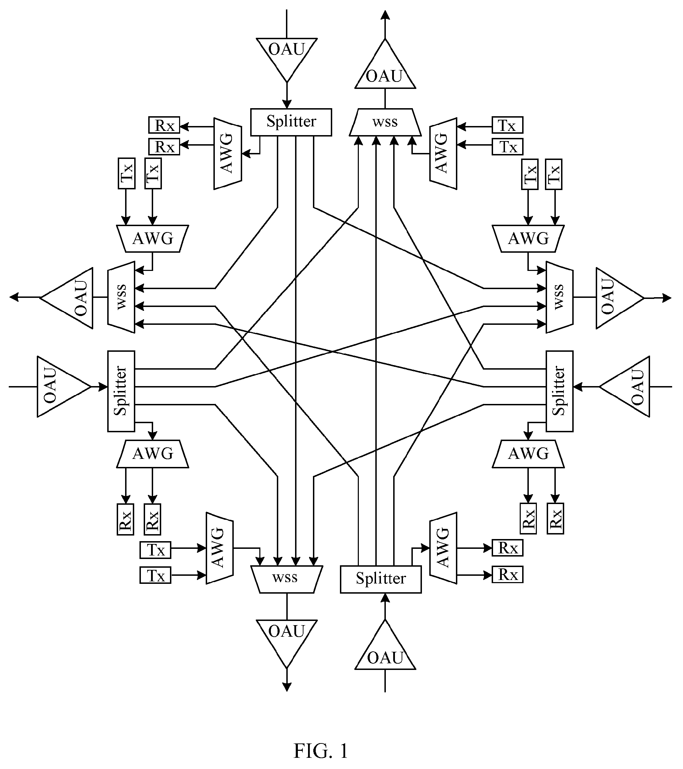

A reconfigurable optical add-drop multiplexer (reconfigurable optical add-drop multiplexer, ROADM for short) architecture is adopted for most existing optical network switching nodes. Currently in the industry, a function of the ROADM is implemented mostly by using a wavelength selective switch (Wavelength Selective Switch, WSS for short). Referring to FIG. 1, an existing ROADM node based on a WSS device is provided. The ROADM node has four dimensions: east, south, west, and north. In each dimension, there are one WSS and one optical splitter (Splitter). All dense wavelength division multiplexing (Dense Wavelength Division Multiplexing, DWDM for short) signals outside the node are input by using the splitter and then broadcasted to a WSS port in another dimension. Use of the splitter makes the ROADM architecture have a broadcast function, that is, an input signal in each dimension can be broadcasted to another dimension. The WSS is used at a receiving output end in each dimension. The WSS can output any wavelength in an input DWDM signal from any output port of the WSS. On the other hand, the WSS can also receive any wavelength, perform combination, and output the wavelength from a serial interface end of the WSS. A function of adding/dropping a wavelength is provided in each dimension. As shown in the figure, a local signal is added by using a transmitter Tx, and a signal dropped to a local user port is received by using Rx. At an input end, that is, a splitter end, in each dimension, one signal is split to be used for dropping a wavelength. At an output end, that is, a WSS end, in each dimension, one port is split to be used for adding a wavelength. In this architecture, an arrayed waveguide grating (Arrayed Waveguide Grating, AWG for short) or another multiplexer/demultiplexer is used for both adding and dropping a wavelength.

In a process in which the ROADM node performs optical switching, the following problem exists: when an optical signal in a higher dimension is transmitted, not only quantities of WSSs and splitters need to be increased, but also a quantity of switching optical cables needs to be increased, and this increases complexity of an optical network switching node device. Therefore, the ROADM node is not suitable for switching transmission of an optical signal in a high dimension.

### SUMMARY

Embodiments of the present invention provide an optical network switching device, which can reduce complexity of switching transmission of an optical signal in a high dimension.

To achieve the foregoing objectives, the following technical solutions are used in the embodiments of the present invention:

According to a first aspect, an optical network switching device is provided, including at least one filter, an M×N optical switch, and at least one combiner,
where the filter includes one input port and at least one branch output port, where the input port of the filter is configured to input a first wavelength division multiplexing signal, and the branch output port of the filter is connected to an input port of the M×N optical switch; and the filter is configured to split the first wavelength division multiplexing signal into branch optical signals at any wavelength, and output the branch optical signals to the M×N optical switch; and
the combiner includes one output port and at least one branch input port, where the output port of each combiner is configured to output a second wavelength division multiplexing signal, and the branch input port of the combiner is connected to an output port of the M×N optical switch; and the branch input port of the combiner is configured to receive an optical signal from the M×N optical switch.

In a first possible implementation manner, with reference to the first aspect, the optical network switching device further includes one wavelength conversion apparatus, where the wavelength conversion apparatus includes at least one switching input port and at least one switching output port, where the switching input port of the wavelength conversion apparatus is connected to a switching output port of the M×N optical switch, and the switching output port of the wavelength conversion apparatus is connected to a switching input port of the M×N optical switch; and
the M×N optical switch is configured to select a wavelength conversion optical signal from optical signals received by the input port of the M×N optical switch, and input the wavelength conversion optical signal to the wavelength conversion apparatus, and the wavelength conversion apparatus is configured to change a wavelength of the wavelength conversion optical signal, and then output the wavelength conversion optical signal to the M×N optical switch again.

In a second possible implementation manner, with reference to the first possible implementation manner, the wavelength conversion apparatus includes: at least one multiplexer, at least one demultiplexer, and a wavelength converter;
a common port of the demultiplexer is connected to the switching input port of the wavelength conversion apparatus, a branch port of the demultiplexer is connected to an input port of the wavelength converter, a common port of the multiplexer is connected to the switching output port of the wavelength conversion apparatus, and a branch port of the multiplexer is connected to an output port of the wavelength converter,
where the demultiplexer is configured to demultiplex the wavelength conversion optical signal;
the wavelength converter is configured to perform wavelength conversion on the demultiplexed wavelength conversion optical signal, to obtain a wavelength conversion signal; and
the multiplexer is configured to multiplex the wavelength conversion signal.

In a third possible implementation manner, with reference to the second possible implementation manner, the switching output port of the M×N optical switch is connected to the input port of the wavelength converter; and
the wavelength converter is further configured to perform wavelength conversion on the wavelength conversion optical signal.

In a fourth possible implementation manner, with reference to the third or the second possible implementation manner, the wavelength converter includes: at least one group of a wavelength receiver, an electrical cross-connection processor, and a tunable wavelength transmitter, where the wavelength receiver and the tunable wavelength transmitter are separately connected to the electrical cross-connection processor,
where the wavelength receiver is configured to receive the demultiplexed wavelength conversion optical signal output by the branch port of the demultiplexer;
the electrical cross-connection processor is configured to convert the demultiplexed wavelength conversion optical signal into an electrical signal; and
the tunable wavelength transmitter is configured to convert the electrical signal into an idle wavelength optical signal, and send the idle wavelength optical signal to the multiplexer.

In a fifth possible implementation manner, with reference to the third or the second possible implementation manner, the wavelength converter includes: at least one group of an optical wavelength converter and an optical cross-connector, where the optical wavelength converter is connected to the optical cross-connector,
where the optical wavelength converter is configured to receive the demultiplexed wavelength conversion optical signal output by the branch port of the demultiplexer, and perform wavelength conversion on the demultiplexed wavelength conversion optical signal; and
the optical cross-connector is configured to perform optical cross-connection processing on the optical signal on which the wavelength conversion has been performed, and send the optical signal to the multiplexer.

In a sixth possible implementation manner, with reference to any one of the first to the fifth possible implementation manners, the optical network switching device further includes: at least one delay line,
where one end of the delay line is connected to the input port of the M×N optical switch, and the other end of the delay line is connected to the output port of the M×N optical switch; and
the delay line is configured to delay the wavelength conversion optical signal.

In a seventh possible implementation manner, with reference to the first aspect or with reference to any one of the first to the sixth possible implementation manners,
the M×N optical switch includes at least one input port for receiving an add wavelength signal and at least one output port for outputting a drop wavelength signal, where the input port is configured to receive an add wavelength signal, the N×N optical switch is configured to transmit the add wavelength signal to a corresponding combiner, and optical multiplexing is performed on the add wavelength signal and the branch optical signals at any wavelength by using the combiner, to generate and output the second wavelength division multiplexing signal; and
the M×N optical switch is further configured to select a drop wavelength signal from the branch optical signals at any wavelength, and deliver the drop wavelength signal at the output port.

In an eighth possible implementation manner, with reference to the seventh possible implementation manner, the optical network switching device further includes:
at least one wavelength adding module and at least one wavelength dropping module,
where the wavelength adding module includes one input port and at least one branch output port, where the input port of the wavelength adding module is configured to receive a locally added signal, and the branch output port of the wavelength adding module is connected to the input port of the M×N optical switch; and is configured to convert the locally added signal into the add wavelength signal, and transmit the add wavelength signal to the input port of the M×N optical switch; and
the wavelength dropping module includes at least one output port and at least one branch input port, where the output port of the wavelength dropping module is configured to deliver a signal to a local user port, and the branch input port of the wavelength dropping module is connected to the output port of the M×N optical switch; and is configured to receive the drop wavelength signal from the output port of the M×N optical switch, and convert the drop wavelength signal into the signal delivered to the local user port.

In a ninth possible implementation manner, with reference to the eighth possible implementation manner, the wavelength adding module is a multiplexer, and the wavelength dropping module is a demultiplexer.

In a tenth possible implementation manner, with reference to the seventh possible implementation manner, the optical network switching device further includes: at least one multiplexer,
where a common port of the multiplexer is connected to the input port of the M×N optical switch, and a branch port of the multiplexer is connected to the output port of the M×N optical switch; and
the multiplexer is configured to receive, by using the branch port, the add wavelength signal sent by the M×N optical switch, multiplex the add wavelength signal, and send the multiplexed add wavelength signal to the M×N optical switch by using the common port of the multiplexer.

In an eleventh possible implementation manner, with reference to the seventh possible implementation manner, the optical network switching device further includes: at least one demultiplexer,
where a common port of the demultiplexer is connected to the output port of the M×N optical switch, and a branch port of the demultiplexer is connected to the input port of the M×N optical switch; and
the demultiplexer is configured to receive, by using the branch port, the drop wavelength signal sent by the M×N optical switch, demultiplex the drop wavelength signal, and send the demultiplexed drop wavelength signal to the M×N optical switch by using the branch port of the demultiplexer.

By using the foregoing solutions, a first wavelength division multiplexing signal is split into optical signals at any wavelength by using a filter, so that an M×N optical switch can output the optical signals at any wavelength according to dimensions. Therefore, complexity of switching transmission of an optical signal in a high dimension can be reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art.
FIG. 1 is a schematic structural diagram of an optical network switching device according to the prior art;
FIG. 2 is a schematic structural diagram of an optical network switching device according to an embodiment of the present invention;
FIG. 3 is a schematic structural diagram of an optical network switching device according to another embodiment of the present invention;
FIG. 4 is a schematic structural diagram of an optical network switching device according to still another embodiment of the present invention;
FIG. 5 is a schematic structural diagram of an optical network switching device according to yet another embodiment of the present invention;
FIG. 6 is a schematic structural diagram of an optical network switching device according to another embodiment of the present invention;
FIG. 7 is a schematic structural diagram of a wavelength converter according to an embodiment of the present invention;
FIG. 8 is a schematic structural diagram of a wavelength converter according to another embodiment of the present invention;
FIG. 9 is a schematic structural diagram of an optical network switching device according to still another embodiment of the present invention;
FIG. 10 is a schematic structural diagram of an optical network switching device according to yet another embodiment of the present invention;
FIG. 11 is a schematic structural diagram of an optical network switching device according to another embodiment of the present invention;
FIG. 12 is a schematic structural diagram of an optical network switching device according to still another embodiment of the present invention; and
FIG. 13 is a schematic structural diagram of an optical network switching device according to yet another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. In the accompanying drawings, a flow direction of a signal between components is indicated by using a direction to which an arrow points, and therefore, input or output arrows of the components also indicate connection relationships between ports of the components. The accompanying drawings are merely exemplary. For a specific connection relationship, refer to description in the embodiments.

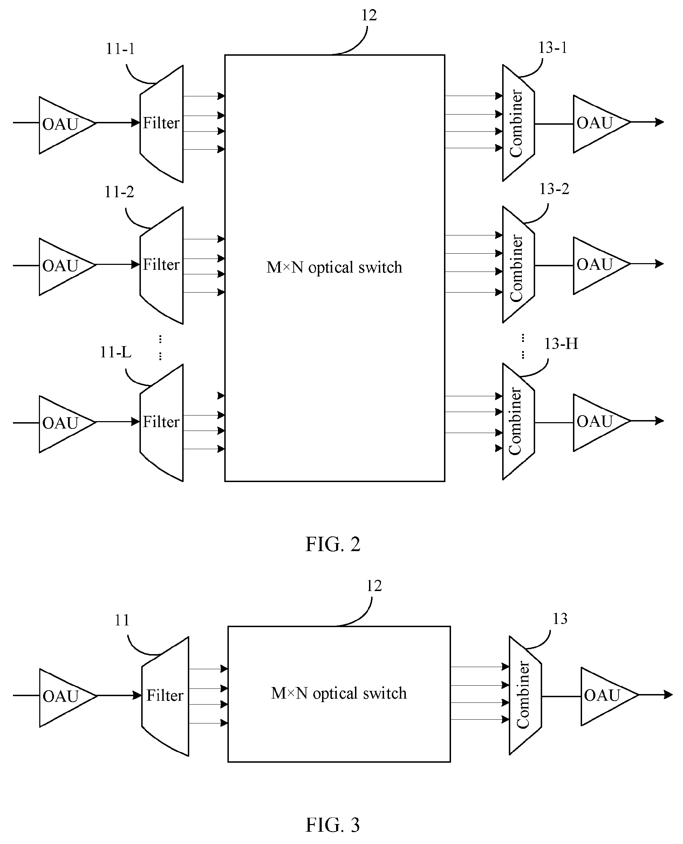

An embodiment of the present invention provides an optical network switching device. Referring to FIG. 2, the network switching device includes: at least one filter (11-1, 11-2, ..., 11-L), an M×N optical switch 12, and at least one combiner (13-1, 13-2, ..., 13-H).

The filter (11-1, 11-2, ..., 11-L) includes one input port and at least one branch output port, where the input port of the filter (11-1, 11-2, ..., 11-L) is configured to input a first wavelength division multiplexing signal, and the branch output port of the filter (11-1, 11-2, ..., 11-L) is connected to an input port of the M×N optical switch 12; and is configured to split the first wavelength division multiplexing signal into branch optical signals at any wavelength, and output the branch optical signals to the M×N optical switch 12.

The filter can split the wavelength division multiplexing signal into the optical signals at any wavelength, and output the optical signals at any branch output port of the filter. In this way, wavelength utilization in an optical switching process can be improved. The filter may be an optical splitter or a demultiplexer, and is configured to process a wavelength division multiplexing signal, and the filter may be have multiple branch output ports, for example, 2, 4, or 9 branch output ports.

The combiner (13-1, 13-2, ..., 13-H) includes one output port and at least one branch input port, where the output port of the combiner (13-1, 13-2, ..., 13-H) is configured to output a second wavelength division multiplexing signal, and the branch input port of the combiner (13-1, 13-2, ..., 13-H) is connected to an output port of the M×N optical switch 12, and is configured to receive an optical signal from the M×N optical switch 12.

A quantity M of input ports of the M×N optical switch 12 is not less than a total quantity of branch output ports of the filter (11-1, 11-2, ..., 11-L). A quantity N of output ports of the M×N optical switch 12 is not less than a total quantity of branch output ports of the combiner (13-1, 13-2, ..., 13-H), where the quantity M of the input ports of the M×N optical switch 12 may be equal to or may be unequal to the quantity N of the output ports.

FIG. 2 shows optical amplifier units (optical amplifier unit, OAU) located on a signal input side and a signal output side. Certainly, performing amplification processing on an input signal or an output signal by using the OAU is a regular technical means, and details about amplification processing involved in the following embodiments are not provided.

The filter (11-1, 11-2, ..., 11-L) performs wavelength splitting on the first wavelength division multiplexing signal corresponding to the filter (11-1, 11-2, ..., 11-L), and separately outputs the optical signals after the wavelength splitting from the branch output port of the filter (11-1, 11-2, ..., 11-L) to M input ports of the M×N optical switch 12; after selection by the M×N optical switch 12, the M×N optical switch 12 transmits the optical signals after the wavelength splitting through N output ports to a branch input port of the corresponding combiner (13-1, 13-2, ..., 13-H); and the combiner (13-1, 13-2, ..., 13-H) multiplexes the optical signals, which are input from the branch input ports, into the second wavelength division multiplexing signal, and outputs the second wavelength division multiplexing signal at the output port.

That is, a branch output port of each filter of the L filters is connected to one input port of the M×N optical switch. When each filter includes Z branch output ports, the M×N optical switch includes at least Z×L input ports. Certainly, a quantity of all branch output ports included in each filter of the L filters may also be unequal to a quantity of all branch output ports included in another filter. In this case, a quantity of the input ports included in the M×N optical switch is greater than or equal to a sum of quantities of branch output ports of all the L filters. Similarly, a branch input port of each combiner of the H combiners is connected to one output port of the M×N optical switch. When each combiner includes Z branch input ports, the M×N optical switch includes at least Z×H output ports. Certainly, a quantity of all branch input ports included in each combiner of the H combiner may also be unequal to a quantity of all branch input ports included in another combiner. In this case, a quantity of the output ports included in the M×N optical switch is greater than or equal to a sum of quantities of branch input ports of the H combiners.

For example, referring to FIG. 3, the network switching device includes one filter 11-1, an M×N optical switch 12, and one combiner 13-1.

The filter 11-1 includes one input port and four branch output ports, where the input port of the filter 11-1 is configured to receive a first wavelength division multiplexing signal, and the four branch output ports of the filter 11-1 are separately connected to four input ports of the M×N optical switch 12; and the filter is configured to split the first wavelength division multiplexing signal into branch optical signals at any wavelength, and output the branch optical signals to the M×N optical switch 12; and
the combiner 13-1 includes one output port and four branch input ports, where the output port of the combiner 13-1 is configured to output a second wavelength division multiplexing signal, and the four branch input ports of the combiner 13-1 is separately connected to four output ports of the M×N optical switch 12, and are configured to receive an optical signal from the M×N optical switch 12.

A quantity M of the input ports of the M×N optical switch 12 is not less than a quantity (for example, four) of the branch output ports of the filter 11-1; a quantity N of the output ports of the M×N optical switch 12 is not less than a quantity (for example, four) of the branch output ports of the combiner 13-1. When the quantities of the input ports and the output ports of the M×N optical switch 12 are both four, an input port or an output port that does not transmit an optical signal is in an idle state.

The filter 11-1 performs wavelength splitting on the first wavelength division multiplexing signal, and separately outputs optical signals after the wavelength splitting from the four branch output ports of the filter 11-1 to the four input ports of the M×N optical switch 12; after selection by the M×N optical switch 12, the M×N optical switch 12 transmits optical signals after the wavelength splitting that need to be added to the combiner 13-1 to a corresponding branch input port of the combiner 13-1 through the four input ports of the M×N optical switch 12; and the combiner 13-1 multiplexes the optical signals, which are input from the branch input port, into the second wavelength division multiplexing signal, and outputs the second wavelength division multiplexing signal at the output port.

In the optical network switching device provided in this embodiment of the present invention, a first wavelength division multiplexing signal is split into optical signals at any wavelength by using a filter, so that an M×N optical switch can output the optical signals at any wavelength according to dimensions. Therefore, complexity of switching transmission of an optical signal in a high dimension can be reduced.

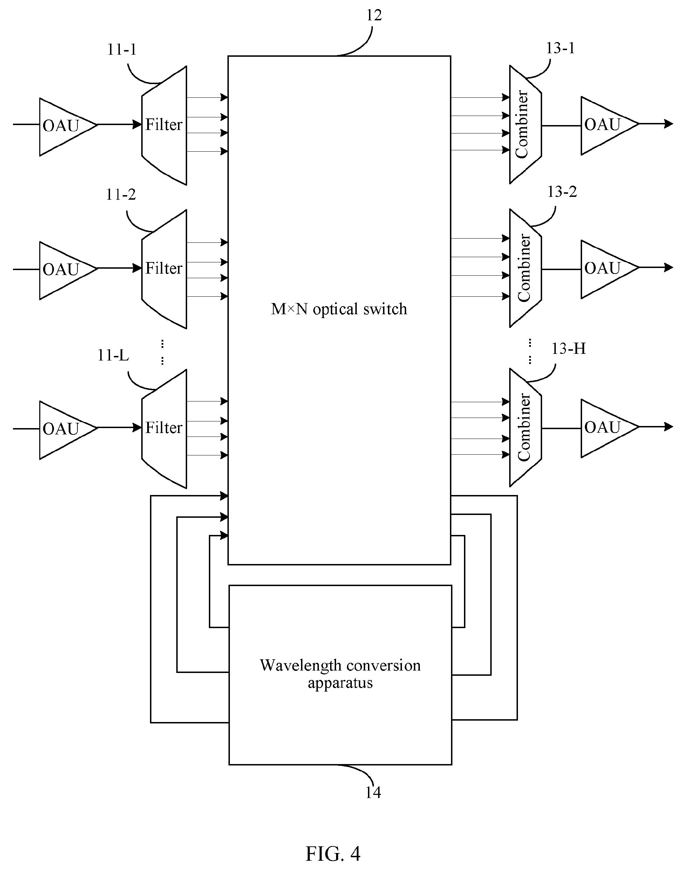

Further, referring to FIG. 4, the optical network switching device further includes: one wavelength conversion apparatus 14, where the wavelength conversion apparatus 14 includes at least one switching input port and at least one switching output port, where the switching input port of the wavelength conversion apparatus 14 is connected to a switching output port of the M×N optical switch 12, and the switching output port of the wavelength conversion apparatus 14 is connected to a switching input port of the M×N optical switch 12; and
the M×N optical switch 12 is configured to select a wavelength conversion optical signal from optical signals received by the input port of the M×N optical switch, and input the wavelength conversion optical signal to the wavelength conversion apparatus 14, and the wavelength conversion apparatus 14 is configured to change a wavelength of the wavelength conversion optical signal, and then output the wavelength conversion optical signal to the M×N optical switch 12 again.

There is no difference between functions of all input ports of the M×N optical switch 12, and there is no difference between functions of all output ports. Therefore, it may be understood that there is no difference between the switching input port of the M×N optical switch 12 and the input port of the M×N optical switch 12 in FIG. 2, and the switching input port is defined according to a function of the port in the embodiment corresponding to FIG. 4, that is, some input ports of the M×N optical switch 12 may be directly used as switching input ports. In addition, each switching input port of the M×N optical switch 12 is connected to one switching output port of the wavelength conversion apparatus 14. On the basis of FIG. 2, a quantity of input ports of the M×N optical switch 12 should be greater than or equal to the sum of a quantity of branch output ports of all filters and a quantity of all switching output ports of the wavelength conversion apparatus 14. Similarly, on the basis of FIG. 2, a quantity of output ports of the M×N optical switch 12 should be greater than or equal to the sum of a quantity of branch input ports of all combiners and a quantity of all switching input ports of the wavelength conversion apparatus 14.

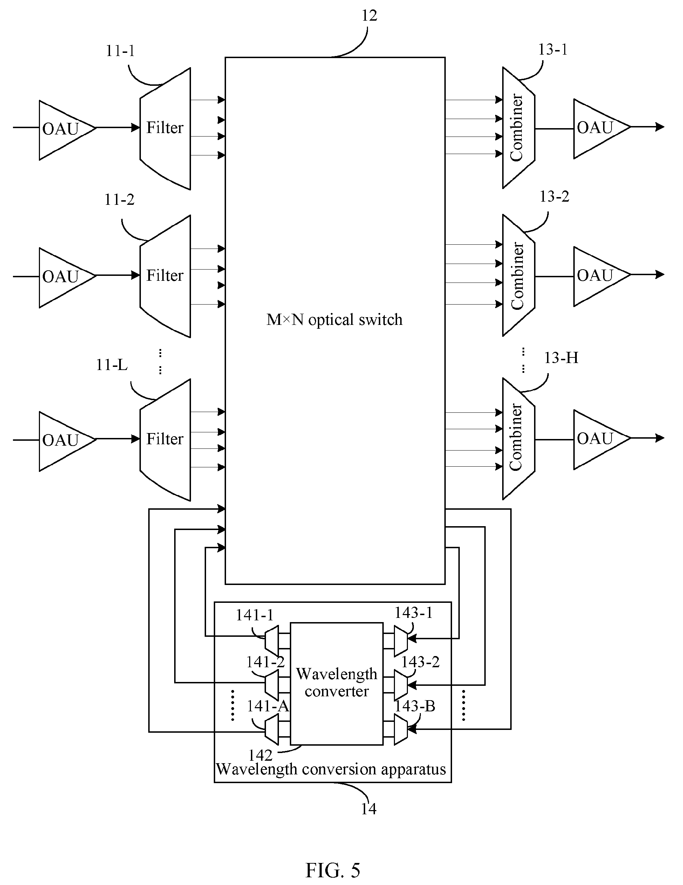

Specifically, referring to FIG. 5, the wavelength conversion apparatus 14 includes: at least one multiplexer (141-1, 141-2, ..., 141-A), at least one demultiplexer (143-1, 143-2, ..., 143-B), and a wavelength converter 142; and
a common port of the demultiplexer (143-1, 143-2, ..., 143-B) is connected to the switching input port of the wavelength conversion apparatus, a branch port of the demultiplexer (143-1, 143-2, ..., 143-B) is connected to an input port of the wavelength converter, a common port of the multiplexer (141-1, 141-2, ..., 141-A) is connected to the switching output port of the wavelength conversion apparatus, and a branch port of the multiplexer (141-1, 141-2, ..., 141-A) is connected to an output port of the wavelength converter,
where the demultiplexer (143-1, 143-2, ..., 143-B) is configured to demultiplex the wavelength conversion optical signal;
the wavelength converter 142 is configured to perform wavelength conversion on the demultiplexed wavelength conversion optical signal; and
the multiplexer (141-1, 141-2, ..., 141-A) is configured to multiplex the wavelength conversion optical signal after the wavelength conversion.

When one wavelength division multiplexing signal enters the optical network switching device, if wavelength conflict occurs among branch optical signals, a group of conflicting branch optical signals are filtered out from one branch output port of the filter (11-1, 11-2, ..., 11-L), to form wavelength conversion optical signals, which enter the wavelength conversion apparatus 14 through the switching output port of the M×N optical switch 12 for the wavelength conversion. For example, after splitting one wavelength division multiplexing signal into optical signals, the filter 11-1 needs to switch branch optical signals whose wavelengths are λ15, λ16, and λ25 to the combiner 13-1; however, in this case, another filter such as the filter 11-2 also needs to switch branch optical signals whose wavelengths are λ15, λ16, and λ25 to the combiner 13-1. Therefore, the wavelength conflict occurs in this case. The branch optical signals whose wavelengths are λ15, λ16, and λ25 in the filter 11-2 and branch optical signals whose wavelengths are λ15, λ16, and λ25 in another dimension cannot be directly switched to the combiner 13-1, and the wavelength conversion must be performed. Therefore, the filter 11-2 filters out the three branch optical signals together from a branch output port of the filter 11-2, and transmits the three branch optical signals to the M×N optical switch 12; the three branch optical signals enter the wavelength conversion apparatus 14 through the switching output port of the M×N optical switch 12, the demultiplexer (143-1, 143-2, ..., 143-B) demultiplexes the wavelength conversion optical signals, the wavelength converter 142 performs wavelength conversion on the demultiplexed wavelength conversion optical signals, and then the multiplexer (141-1, 141-2, ..., 141-A) multiplexes optical signals after the wavelength conversion; and finally the optical signals are transmitted to the switching input port of the M×N optical switch 12, and the M×N optical switch 12 selects a correct combiner (13-1, 13-2, ..., 13-H) to add the optical signals to a target dimension. In this way, a problem of the wavelength conflict is resolved, and wavelength conflict independence is implemented.

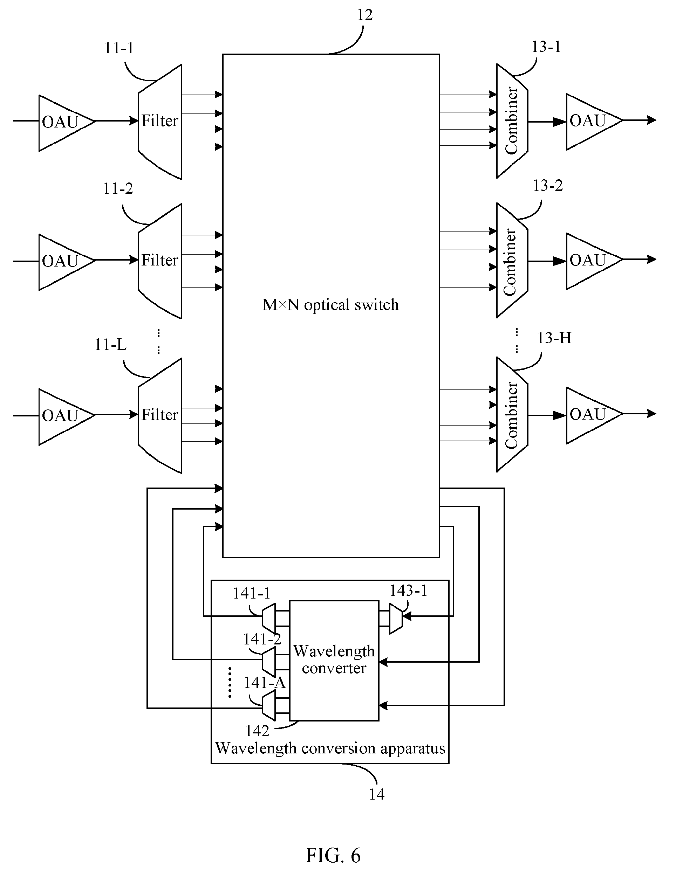

Referring to FIG. 6, further, the switching output port of the M×N optical switch 12 is connected to the input port of the wavelength converter 142; and
in this way, the wavelength converter 142 may be configured to directly perform wavelength conversion 14 on a wavelength conversion optical signal with a single wavelength: When one wavelength division multiplexing signal enters the switching node, if wavelength conflict occurs among branch optical signals, a group of conflicting branch optical signals are filtered out from one branch output port of the filter (11-1, 11-2, ..., 11-L), to form wavelength conversion optical signals; the wavelength conversion optical signals are transmitted to the switching output port of the M×N optical switch 12, and directly enter the wavelength converter 142, which performs wavelength conversion on the wavelength conversion optical signals; the multiplexer (141-1, 141-2, ..., 141-M) multiplexes the wavelength conversion optical signals on which the wavelength conversion has been performed, and finally the multiplexed wavelength conversion optical signals are transmitted to the switching input port of the M×N optical switch 12; and finally the M×N optical switch 12 selects a correct combiner (13-1, 13-2, ..., 13-H) to add the multiplexed wavelength conversion optical signals to a target dimension. The manner can reduce unnecessary use of the demultiplexer, increase a switching speed, and reduce overheads.

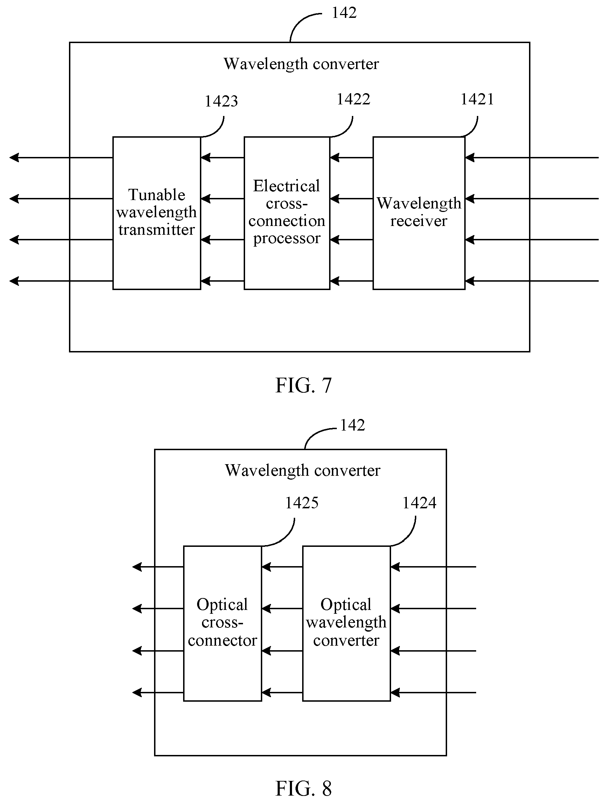

Further, referring to FIG. 7, the wavelength converter 142 includes: at least one group of a wavelength receiver 1421, an electrical cross-connection processor 1422, and a tunable wavelength transmitter 1423; and
the wavelength receiver 1421 and the tunable wavelength transmitter 1423 are separately connected to the electrical cross-connection processor 1422,
where the wavelength receiver 1421 is configured to receive the demultiplexed wavelength conversion optical signal output by the branch port of the demultiplexer (143-1, 143-2, ..., 143-B);
the electrical cross-connection processor 1422 is configured to convert the demultiplexed wavelength conversion optical signal into an electrical signal; and
the tunable wavelength transmitter 1423 is configured to convert the electrical signal into an idle wavelength optical signal, and send the idle wavelength optical signal to the multiplexer (141-1, 141-2, ..., 141-A).

Optical-to-electrical-to-optical conversion can be performed on the wavelength conversion optical signal by using the wavelength converter shown in FIG. 7, thereby implementing conversion of a wavelength. Certainly, the figure shows a schematic diagram of only one group of the wavelength receiver 1421, the electrical cross-connection processor 1422, and the tunable wavelength transmitter 1423. Certainly, an implementable form of the wavelength converter also includes an implementation form in which at least two wavelength receivers and tunable wavelength transmitters are connected to one the electrical cross-connection processor. Examples are not separately provided herein.

Referring to FIG. 8, optionally, the wavelength converter 142 includes: at least one group of an optical wavelength converter 1424 and an optical cross-connector 1425; and
the optical wavelength converter 1424 is connected to the optical cross-connector 1425,
where the optical wavelength converter 1424 is configured to receive the demultiplexed wavelength conversion optical signal output by the branch port of the demultiplexer (143-1, 143-2, ..., 143-B), and perform wavelength conversion on the demultiplexed wavelength conversion optical signal; and
the optical cross-connector 1425 is configured to perform optical cross-connection processing on the optical signal on which the wavelength conversion has been performed, and send the optical signal to the multiplexer (141-1, 141-2, ..., 141-A).

Optical-to-optical conversion can be performed on the wavelength conversion optical signal by using the wavelength converter 142 shown in FIG. 8, thereby implementing conversion of a wavelength. The optical wavelength converter 1424 has many implementation mechanisms, for example, is implemented by using an effect such as a non-linear effect, self phase modulation, cross phase modulation, or four-wavelength mixing, and is commonly constructed by using an SOA (semiconductor optical amplifier).

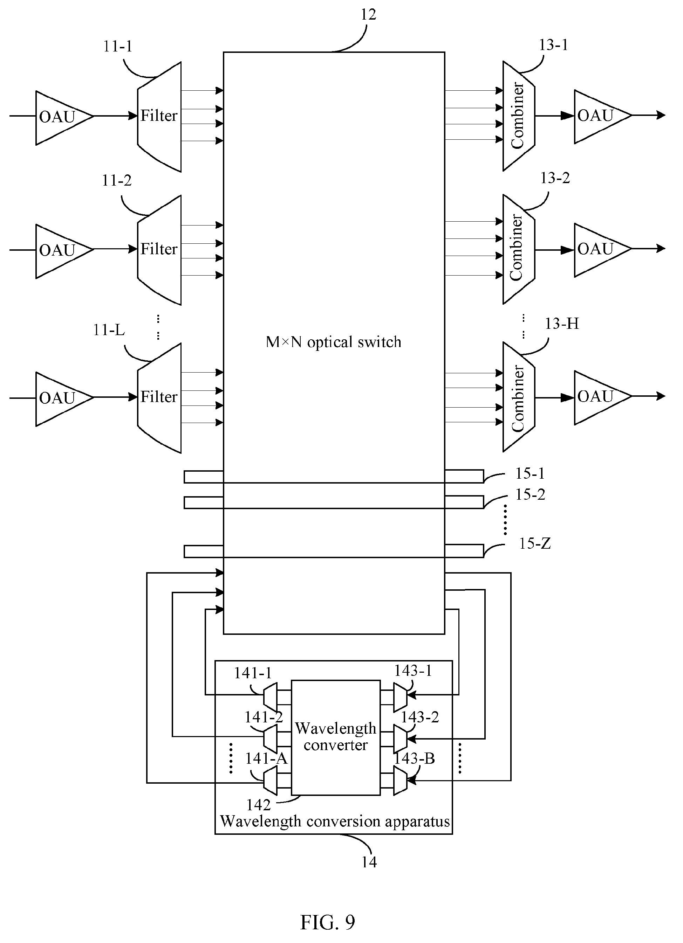

Further, referring to FIG. 9, the optical network switching device further includes: at least one delay line (15-1, 15-2, ..., 15-Z); and
one end of the delay line (15-1, 15-2, ..., 15-Z) is connected to the input port of the M×N optical switch 12, and the other end of the delay line (15-1, 15-2, ..., 15-Z) is connected to the output port of the M×N optical switch 12.

Obviously, disposing the delay line is added in FIG. 9 on the basis of FIG. 4. Certainly, disposing the delay line may be adopted in each structure that includes the wavelength conversion apparatus, that is, the delay line may also be added on the basis of FIG. 5. An accompanying drawing is not provided.

When the wavelength conflict occurs between branch optical signals in more than two dimensions, a wavelength conversion optical signal in one of the two dimensions is selected to enter the wavelength conversion apparatus 14 for the wavelength conversion. A wavelength conversion optical signal in the other dimension enters the delay line 15-1 through the output port of the M×N optical switch 12, then is transmitted from the delay line 15-1 to the input port of the M×N optical switch 12, and then enters the delay line 15-1 again from the output port of the M×N optical switch 12, and is delayed cyclically in this way. Alternatively, the wavelength conversion optical signal may enter another delay line (15-2, ..., 15-Z) from the M×N optical switch 12 to be delayed cyclically. After a demultiplexing port releases the wavelength conversion optical signal, the wavelength conversion optical signal in the other dimension enters the wavelength conversion apparatus 14 from the switching output port of the M×N optical switch 12 for the wavelength conversion.

A quantity of delay lines (15-1, 15-2, ..., 15-Z) may be determined according to a factor such as a quantity of dimensions or a conflict probability. Lengths of multiple delay lines may be designed according to a rule, and by means of selection by the optical switch, different delay time can be achieved. For example, lengths of three delay lines (15-1, 15-2, and 15-3) are respectively L1, L2, and L3, and a delay time thereof may be: T=(a×L1+ b×L2+ c×L3)/v+N*t, where a, b, and c indicate quantities of times that the light passes through the delay lines (15-1, 15-2, and 15-3), v indicates a speed of the light in the delay lines, N indicates a quantity of times that the light enters the M×N optical switch 12, and t indicates a switching time of the M×N optical switch 12. In the foregoing example, flexibility of processing the wavelength conflict can be increased.

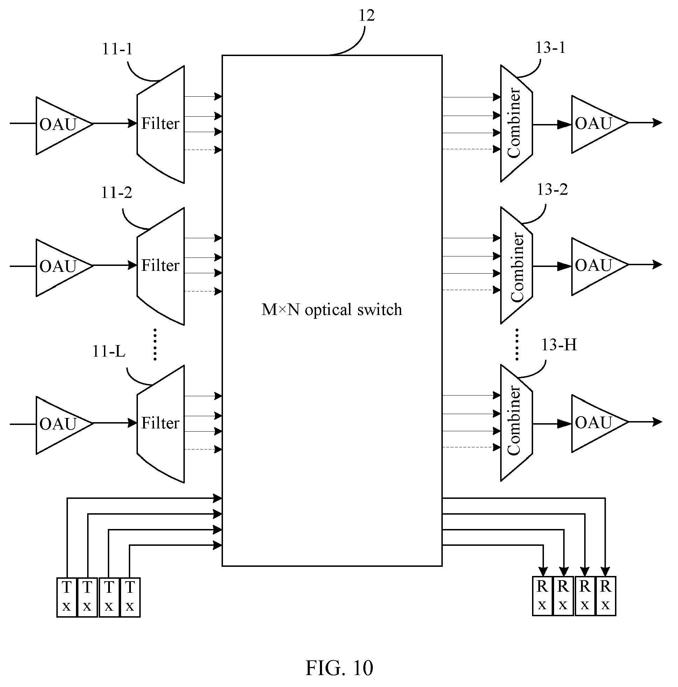

Optionally, referring to FIG. 10, the M×N optical switch includes at least one input port and at least one output port, where the input port is configured to receive an add wavelength signal, the N×N optical switch is configured to transmit the add wavelength signal to a corresponding combiner, and optical multiplexing is performed on the add wavelength signal and the branch optical signals at any wavelength by using the combiner, to generate and output the second wavelength division multiplexing signal; and
the M×N optical switch is further configured to select a drop wavelength signal from the branch optical signals at any wavelength, and deliver the drop wavelength signal at the output port.

In FIG. 10, Tx represents a transmitter, configured to send an add wavelength signal; Rx represents a receiver, configured to receive a drop wavelength signal. At a branch output port of the filter 11-1, a drop wavelength signal is indicated by using short dashed lines, and at a branch input port of the combiner 13-1, an add wavelength signal is indicated by using short dashed lines, which, however, is not a limitation on the filter and the combiner. It may be understood that, a drop wavelength signal can be output from any branch output port of the filter, and an add wavelength signal may be received through any branch input port of the combiner.

In this embodiment of the present invention, the M×N optical switch can multiplex, by using the combiner, and output the locally added add wavelength signal and the output optical signals at any wavelength, and output the drop wavelength signal among the optical signals at any wavelength to a local user port, thereby increasing utilization of a wavelength, improving flexibility of wavelength adding/dropping, and implementing wavelength independence of an add/drop wavelength.

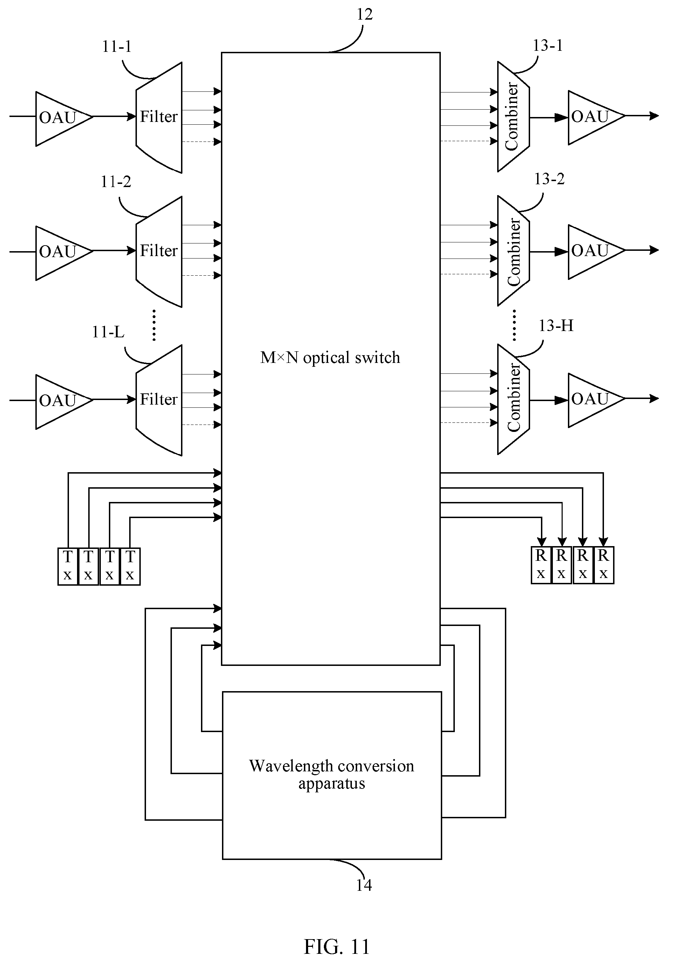

Certainly, with reference to FIG. 4, referring to FIG. 11, when the provided optical network switching device includes both the wavelength conversion function shown in FIG. 4 and the wavelength adding/dropping function shown in FIG. 10, because the add wavelength signal is input from the input port of the M×N optical switch, when the wavelength conflict occurs between the add wavelength signal and an optical signal that is output from the branch output port of the filter, the wavelength conversion can also be performed on the add wavelength signal according to the method provided in this embodiment.

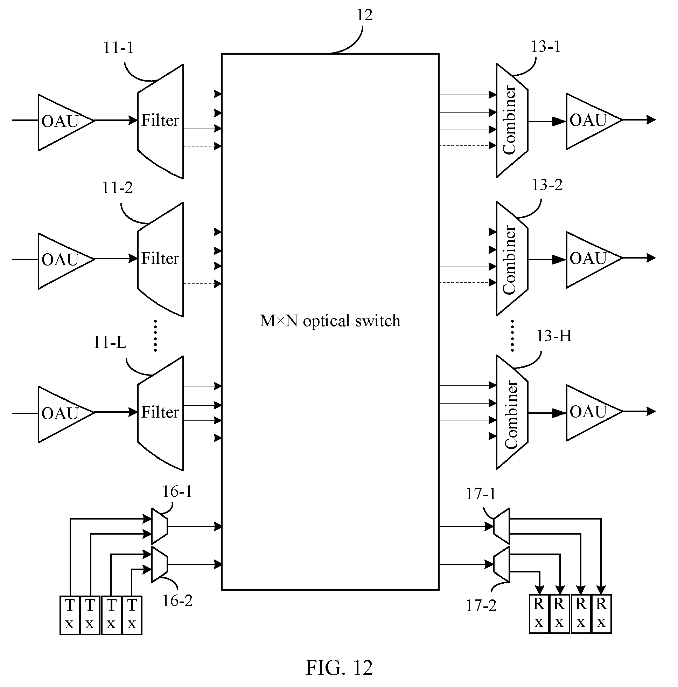

Further, referring to FIG. 12, the optical network switching device further includes: at least one wavelength adding module and at least one wavelength dropping module;
where the wavelength adding module includes one input port and at least one branch output port, where the input port of the wavelength adding module is configured to receive a locally added signal, and the branch output port of the wavelength adding module is connected to the input port of the M×N optical switch 12; and is configured to convert the locally added signal into the add wavelength signal, and transmit the add wavelength signal to the input port of the M×N optical switch 12.

The wavelength dropping module includes at least one output port and at least one branch input port, where the output port of the wavelength dropping module is configured to deliver a signal to a local user port, and the branch input port of the wavelength dropping module is connected to the output port of the M×N optical switch 12; and is configured to receive the drop wavelength signal from the output port of the M×N optical switch 12, and convert the drop wavelength signal into the signal delivered to the local user port.

Further, the wavelength adding module is a multiplexer (16-1, 16-2, ..., 16-X), and the wavelength dropping module is a demultiplexer (17-1, 17-2, ..., 17-Y).

When a local optical signal needs to be added, the multiplexer (16-1, 16-2, ..., 16-X) first multiplexes the local optical signal, to form an add wavelength signal, and inputs the add wavelength signal to the M×N optical switch 12 through the input port of the M×N optical switch 12; after selection by the M×N optical switch 12, the M×N optical switch 12 transmits the add wavelength signal to a corresponding combiner (13-1, 13-2, ..., 13-H); and optical multiplexing is performed on the add wavelength signal and the branch optical signals at any wavelength by using the combiner (13-1, 13-2, ..., 13-H), to generate and output the second wavelength division multiplexing signal; and
when branch optical signals in a same dimension need to be delivered to a local user port, the filter (11-1, 11-2, ..., 11-L) groups the branch optical signals into one group, to form drop wavelength signals, and inputs the drop wavelength signals to the input port of the M×N optical switch 12; after selection by the M×N optical switch 12, the M×N optical switch 12 transmits the drop wavelength signals to a corresponding output port of the M×N optical switch 12, and outputs the drop wavelength signals to the demultiplexer (17-1, 17-2, ..., 17-Y); and the demultiplexer (17-1, 17-2, ..., 17-Y) demultiplexes the drop wavelength signals, to form optical signals with a single wavelength, and then delivers the optical signals with the single wavelength to the local user port.

A quantity of multiplexers (16-1, 16-2, ..., 16-X) determines a quantity of dimensions for adding. A quantity of demultiplexers (17-1, 17-2, ..., 17-Y) determines a quantity of dimensions for sending. In this way, wavelength adding/dropping in multiple dimensions can be implemented, and flexibility of wavelength adding/dropping can be improved. FIG. 12 shows two multiplexers (16-1 and 16-2) and two demultiplexers (17-1 and 17-2).

An embodiment corresponding to FIG. 12 includes a wavelength adding module and a wavelength dropping module, multiplexing processing of a locally added signal by a multiplexer causes wavelength dependence of an add wavelength signal, and processing of a drop wavelength signal by a demultiplexer also causes wavelength dependence of the drop wavelength signal. Therefore, wavelength independence is lost. However, in the embodiment corresponding to FIG. 2, in a case in which the branch output port of the filter (11-1, 11-2, ..., 11-L), the branch input port of the combiner (13-1, 13-2, ..., 13-H), and the input port for inputting an add wavelength signal and the output port for outputting a drop wavelength signal of the M×N optical switch 12 are enough, wavelength adding/dropping for an optical signal with a single wavelength can be implemented, thereby implementing wavelength independence.

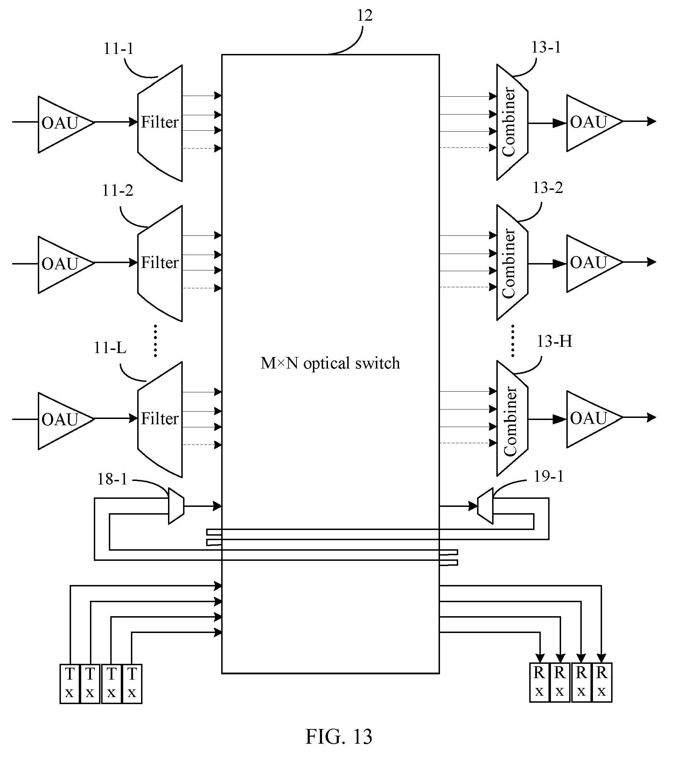

Further, referring to FIG. 13, the optical network switching device further includes: at least one multiplexer (18-1, 18-2, ..., 18-Q),
where a common port of the multiplexer (18-1, 18-2, ..., 18-Q) is connected to the input port of the M×N optical switch 12, and a branch port of the multiplexer (18-1, 18-2, ..., 18-Q) is connected to the output port of the M×N optical switch 12; and
the multiplexer (18-1, 18-2, ..., 18-Q) is configured to receive, by using the branch port, the add wavelength signal sent by the M×N optical switch 12, multiplex the add wavelength signal, and then send the multiplexed add wavelength signal to the M×N optical switch 12 by using the common port of the multiplexer (18-1, 18-2, ..., 18-Q).

When there is a large quantity of add wavelength signals, locally added optical signals enter the M×N optical switch 12 from an add wavelength input port of the M×N optical switch 12; after selection by the M×N optical switch 12, the M×N optical switch 12 sends local optical signals in a same dimension to a same multiplexer (18-1, 18-2, ..., 18-Q); after the local optical signals are multiplexed by the multiplexer (18-1, 18-2, ..., 18-Q) and transmitted to the add wavelength input port of the M×N optical switch 12; and after selection by the M×N optical switch 12, the multiplexed optical signals are transmitted to a combiner (13-1, 13-2, ..., 13-H) in a target dimension.

By means of the foregoing solution, a solution for adding a large quantity of wavelengths can be implemented, and flexibility of wavelength adding can be improved.

Optionally, referring to FIG. 13, at least one demultiplexer (19-1, 19-2, ..., 19-M) is included,
where a common port of the demultiplexer (19-1, 19-2, ..., 19-P) is connected to the output port of the M×N optical switch 12, and a branch port of the demultiplexer (19-1, 19-2, ..., 19-P) is connected to the input port of the M×N optical switch 12; and
the demultiplexer (19-1, 19-2, ..., 19-P) is configured to receive, by using the branch port, the drop wavelength signal sent by the M×N optical switch 12, demultiplex the drop wavelength signal, and then send the demultiplexed drop wavelength signal to the M×N optical switch 12 by using the branch port of the demultiplexer (19-1, 19-2, ..., 19-P). FIG. 13 shows one multiplexer 18-1 and one demultiplexer 19-1.

When there is a large quantity of drop wavelength signals, the filter (11-1, 11-2, ..., 11-L) may group branch optical signals that need to be delivered in each dimension into one group, to form drop wavelength signals, and transmit the drop wavelength signals into the M×N optical switch 12; after selection by the M×N optical switch 12, the drop wavelength signals are sent into the demultiplexer (19-1, 19-2, ..., 19-P); after demultiplexing the drop wavelength signals, the demultiplexer (19-1, 19-2, ..., 19-P) sends the demultiplexed signals delivered to the local user port to the M×N optical switch 12 again; and after selection by the M×N optical switch 12, a needed signal delivered to the local user port may be transmitted to any drop wavelength output port of the M×N optical switch 12.

By means of the foregoing solution, a solution for dropping a large quantity of wavelengths can be implemented, and flexibility of wavelength dropping can be improved.

In FIG. 13, disposing a multiplexer and a demultiplexer is added on the basis of FIG. 10. Certainly, disposing in the foregoing connection manner may be adopted in each structure that includes wavelength adding and dropping modules, that is, the disposing in the foregoing connection manner may also be added on the basis of FIG. 12. An accompanying drawing is not provided.

In the foregoing embodiments, the M×N optical switch includes: a micro-electro-mechanical systems MEMS optical switch, a waveguide Mach Zehnder Interferometer MZI optical switch, a mechanical optical switch, a magnetic optical switch, or a liquid crystal switch.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An optical network switching device, comprising at least one filter, an M×N optical switch, and at least one combiner,
wherein the filter comprises one input port and at least one branch output port, wherein the input port of the filter is configured to input a first wavelength division multiplexing signal, and the branch output port of the filter is connected to an input port of the M×N optical switch; and the filter is configured to split the first wavelength division multiplexing signal into branch optical signals at any wavelength, and output the branch optical signals to the M×N optical switch; and
the combiner comprises one output port and at least one branch input port, wherein the output port of each combiner is configured to output a second wavelength division multiplexing signal, and the branch input port of the combiner is connected to an output port of the M×N optical switch; and the branch input port of the combiner is configured to receive an optical signal from the M×N optical switch.

2. The optical network switching device according to claim 1, further comprising one wavelength conversion apparatus, wherein the wavelength conversion apparatus comprises at least one switching input port and at least one switching output port, wherein the switching input port of the wavelength conversion apparatus is connected to a switching output port of the M×N optical switch, and the switching output port of the wavelength conversion apparatus is connected to a switching input port of the M×N optical switch; and
the M×N optical switch is configured to select a wavelength conversion optical signal from optical signals received by the input port of the M×N optical switch, and input the wavelength conversion optical signal to the wavelength conversion apparatus, and the wavelength conversion apparatus is configured to change a wavelength of the wavelength conversion optical signal, and then output the wavelength conversion optical signal to the M×N optical switch again.

3. The optical network switching device according to claim 2, wherein the wavelength conversion apparatus comprises: at least one multiplexer, at least one demultiplexer, and a wavelength converter; and
a common port of the demultiplexer is connected to the switching input port of the wavelength conversion apparatus, a branch port of the demultiplexer is connected to an input port of the wavelength converter, a common port of the multiplexer is connected to the switching output port of the wavelength conversion apparatus, and a branch port of the multiplexer is connected to an output port of the wavelength converter,
wherein the demultiplexer is configured to demultiplex the wavelength conversion optical signal;
the wavelength converter is configured to perform wavelength conversion on the demultiplexed wavelength conversion optical signal, to obtain a wavelength conversion signal; and
the multiplexer is configured to multiplex the wavelength conversion signal.

4. The optical network switching device according to claim 3, wherein the switching output port of the M×N optical switch is connected to the input port of the wavelength converter; and
the wavelength converter is further configured to perform wavelength conversion on the wavelength conversion optical signal.

5. The optical network switching device according to claim 3 or 4, wherein the wavelength converter comprises: at least one group of a wavelength receiver, an electrical cross-connection processor, and a tunable wavelength transmitter, wherein the wavelength receiver and the tunable wavelength transmitter are separately connected to the electrical cross-connection processor,
wherein the wavelength receiver is configured to receive the demultiplexed wavelength conversion optical signal output by the branch port of the demultiplexer;
the electrical cross-connection processor is configured to convert the demultiplexed wavelength conversion optical signal into an electrical signal; and
the tunable wavelength transmitter is configured to convert the electrical signal into an idle wavelength optical signal, and send the idle wavelength optical signal to the multiplexer.

6. The optical network switching device according to claim 3 or 4, wherein the wavelength converter comprises: at least one group of an optical wavelength converter and an optical cross-connector, wherein the optical wavelength converter is connected to the optical cross-connector,
wherein the optical wavelength converter is configured to receive the demultiplexed wavelength conversion optical signal output by the branch port of the demultiplexer, and perform wavelength conversion on the demultiplexed wavelength conversion optical signal; and
the optical cross-connector is configured to perform optical cross-connection processing on the optical signal on which the wavelength conversion has been performed, and send the optical signal to the multiplexer.

7. The optical network switching device according to any one of claims 2 to 6, further comprising: at least one delay line,
wherein one end of the delay line is connected to the input port of the M×N optical switch, and the other end of the delay line is connected to the output port of the M×N optical switch; and
the delay line is configured to delay the wavelength conversion optical signal.

8. The optical network switching device according to any one of claims 1 to 7, wherein the M×N optical switch comprises at least one input port for receiving an add wavelength signal and at least one output port for outputting a drop wavelength signal, wherein the input port is configured to receive an add wavelength signal, the N×N optical switch is configured to transmit the add wavelength signal to a corresponding combiner, and optical multiplexing is performed on the add wavelength signal and the branch optical signals at any wavelength by using the combiner, to generate and output the second wavelength division multiplexing signal; and
the M×N optical switch is further configured to select a drop wavelength signal from the branch optical signals at any wavelength, and deliver the drop wavelength signal at the output port.

9. The optical network switching device according to claim 8, further comprising: at least one wavelength adding module and at least one wavelength dropping module,
wherein the wavelength adding module comprises one input port and at least one branch output port, wherein the input port of the wavelength adding module is configured to receive a locally added signal, and the branch output port of the wavelength adding module is connected to the input port of the M×N optical switch; and is configured to convert the locally added signal into the add wavelength signal, and transmit the add wavelength signal to the input port of the M×N optical switch; and
the wavelength dropping module comprises at least one output port and at least one branch input port, wherein the output port of the wavelength dropping module is configured to deliver a signal to a local user port, and the branch input port of the wavelength dropping module is connected to the output port of the M×N optical switch; and is configured to receive the drop wavelength signal from the output port of the M×N optical switch, and convert the drop wavelength signal into the signal delivered to the local user port.

10. The optical network switching device according to claim 9, wherein the wavelength adding module is a multiplexer, and the wavelength dropping module is a demultiplexer.

11. The optical network switching device according to claim 8, further comprising: at least one multiplexer,
wherein a common port of the multiplexer is connected to the input port of the M×N optical switch, and a branch port of the multiplexer is connected to the output port of the M×N optical switch; and
the multiplexer is configured to receive, by using the branch port, the add wavelength signal sent by the M×N optical switch, multiplex the add wavelength signal, and send the multiplexed add wavelength signal to the M×N optical switch by using the common port of the multiplexer.

12. The optical network switching device according to claim 8, further comprising: at least one demultiplexer,
wherein a common port of the demultiplexer is connected to the output port of the M×N optical switch, and a branch port of the demultiplexer is connected to the input port of the M×N optical switch; and
the demultiplexer is configured to receive, by using the branch port, the drop wavelength signal sent by the M×N optical switch, demultiplex the drop wavelength signal, and send the demultiplexed drop wavelength signal to the M×N optical switch by using the branch port of the demultiplexer.
